# EUROPEAN PATENT APPLICATION

(11) **EP 2 437 193 A1**
(43) Date of publication of application: **04.04.2012**
(21) Application number: 10176017.1
(22) Date of filing: 09.09.2010
(51) Int. Cl.: G06F 21/00

(54) **SAM array**

(71) Applicant: Simulity Labs Ltd, Ffordd Penlan, Parc Menai Bangor Gwynedd LL57 4HJ (GB)
(72) Inventor: Bacca, Nicolas, 92400 Courbevoie (FR)
(74) Representative: Richardt Patentanwälte

(57) **Abstract**

The invention relates to a method of communicating cryptographic information between a client (104) and an array (100) of security access modules (102), the array (100) of security access modules (102) comprising a set of individual security access modules (102), wherein a cryptographic identifier (108) is assigned to each module, the method comprising:
- communicating between the client (104) and a security access module of the array (100) of security access modules (102) the cryptographic identifier (108) of said security access module,
- communicating the cryptographic information by sharing the information between the client (104) and all security access modules (102) having assigned said communicated cryptographic identifier (108), wherein the information sharing is performed in multiple secure communication sessions.

## Description

### Field of the invention

The invention relates to a method of communicating cryptographic information between a client and an array of security access modules (SAMs), and the invention relates to a computer program product.

Services involving a secure token, such as a smartcard, usually involve establishing a secure session to the secure token to prevent against protocol forgery or man-in-the-middle attacks. Typically, such secure sessions use one or several keys, negotiated between the secure token and the remote end, which needs to remain secret. Typically, TLS and GlobalPlatform secure channels are examples of such kinds of secure session protocols (compare http://www.globalplatform.org).

In order to keep these keys secret, they can be stored in a dedicated device such as a SAM (security access module) or a HSM (hardware security module). The SAM is usually a cheap secure microcontroller-based solution, only suitable for transactions involving a low volume of secure operations, while the HSM is an expensive dedicated device like an external device or an embedded computer on an expansion card that can handle a high volume of security operations.

WO 2007/010333 A1 discloses a Host Security Module, HSM, using a collection of smartcards and a communication handler that can communicate with these smartcards. Further, a method for managing such a collection of security devices through maintaining secure signed list of ID's of these security devices is disclosed, wherein security officers must agree in order to add or remove a "security module" from the list. This prevents fraudulent smartcards from being added to the collection. However, such a method of adding or removing security module smartcards from the collection of smartcards always requires for example complicated agreements of respective security officers.

From the foregoing it is readily appreciated that there is a need for an improved SAM array which is easy to implement and which permits to share the resources of the individual SAMs in a simplified manner.

The present invention provides an improved method of communicating cryptographic information between a client and security access modules, as well as a computer program product, as described in the independent claims. Embodiments of the invention are given by the dependent claims.

The present invention provides a method of communicating cryptographic information between a client and an array of security access modules, the array of security access modules comprising a set of individual security access modules, wherein a cryptographic identifier is assigned to each module, wherein the method comprises communicating between the client and the security access module of the array of security access module the cryptographic identifier of said security access module and communicating the cryptographic information by sharing the information between the client and all security access modules having assigned said communicated cryptographic identifier, wherein the information sharing is performed in multiple secure communication sessions.

Throughout the invention, the term 'security access module' (SAM) is understood as a device which permits to perform secure operations by means of a microprocessor and a memory. Herein, secure operations may comprise for example secure key generation, secure key storage, secure usage of cryptographic encryption and decryption techniques and/or any kinds of secure validation techniques employing personal identifiers like pins, passwords or biometric features. This applies to any implementation, either in hardware or in software.

Consequently, 'cryptographic information' is understood as any kind of information communicated between a client and the SAM which enables to retrieve data from the SAM or to provide data to the SAM in order to perform the above mentioned operations like personal identifier validation, encryption and decryption of any kinds of data, key provision and key retrieval.

Embodiments of the invention have the advantage that SAM arrays can be created which permits to share the resources of the individual SAMs. SAMs having the same cryptographic ID are allowed to share information which enables higher volumes of secure operations, shared into an array of identical SAMs, for example stateless hot pluggable SAMs,, for on demand scalability upgrades. Further, this permits to implement pluggable and interchangeable security algorithms on each SAM.

Spoken more illustratively, state of the art SAMs were only able to operate completely independently from each other, whereas in contrast by assigning a cryptographic identifier to each SAM, a client is now able to concurrently use multiple SAMs - the respective SAMs suitable for being used in parallel for a given purpose can be easily identified by the client via the cryptographic identifier of the SAMs.

In accordance with an embodiment of the invention, each security access module is comprised on a separate security token. Throughout the present invention, a security token is understood as a physical device which enables to perform cryptographic operations and/or to store cryptographic information in a secure way. Security tokens may comprise smartcards, USB tokens, any kinds of PC cards and even any kinds of portable devices comprising a memory and a microprocessor like mobile phones or smartphones. Further, RFID devices can be considered as a security token.

In accordance with a further embodiment of the invention, sharing the information comprises splitting a single secure communication session required for communicating the cryptographic information between the client and an individual security access module into the multiple secure communication sessions. Generally, a session is understood as any kind of semi-permanent interactive information interchange between the client and the SAMs.

Splitting a single secure communication session required for communicating the cryptographic information between the client in the individual security access module into the multiple secure communication sessions has the advantage, that cryptographic operations can be performed by parallel processing by multiple SAMs. Thus, the processing is significantly sped up and higher amounts of data can be processed by the array. It has to be reminded here that typically SAMs have only a limited capability with respect to processor and memory resources for processing data, such that by parallel operation of multiple SAMs the total data processing capabilities of the array are enhanced.

In accordance with a further embodiment of the invention, sharing the information comprises duplicating a single secure communication session required for communicating the cryptographic information between the client and an individual security access module into the multiple secure communication sessions.

This permits for example the client to perform fault tolerance and redundancy checks by comparing the responses obtained from different security access modules in the duplicated communication sessions. Further, this permits to enhance the processing bandwidth of the system and provides processing redundancy.

In accordance with a further embodiment of the invention, each security access module comprises a key encryption key and a session encryption key, wherein the security access modules comprising the same cryptographic identifier share the same key encryption key and the same session encryption key. Preferably, the cryptographic identifier is formed from a hashed combination of the key encryption key and the session encryption key. This has the advantage that first of all the client is easily able to identify SAMs in the array which are capable to use the shared cryptographic information. Further, since all SAMs having the same cryptographic identifier share the same key encryption key and the same session encryption key, any kind of communicating with these SAMs is simplified since for the communication no extra individual encryption or decryption keys like for example individual session encryption keys are required. A single session encryption key can be used for providing the secure communication between the client and the SAMs when information sharing is performed in multiple secure communication sessions - the sessions are encrypted with the single session encryption key known to all the participating SAMs sharing the same cryptographic ID.

In accordance with a further embodiment of the invention, the method further comprises encrypting an application key using the key encryption key, wherein the encrypted application key is then stored in a database external to the array of security access modules. This provides support for an unlimited amount of application key material thanks for the optional external key storage strategy as the key storage space is not limited by the SAM internal memory.

Alternatively, the application keys may be stored in a secure manner inside the SAMs. To enable all SAMs in the array to use all keys and to allow a transparent new SAM hot plug, internal keys can be automatically and securely synchronized across all SAMs sharing the same cryptographic identifier. Herein, hot plugging describes the possibility of replacing SAMs without shutting down an ongoing client - SAM communication.

For this reason, preferably each security access module in the array is stateless and adapted to handle an arbitrary communication session in any arbitrary stage. Thus, each SAM is equivalent to any other SAM in the array.

In accordance with a further embodiment of the invention, individual services of a security access module application are distributed over the security access modules of the array sharing the same cryptographic identifier. This has the advantage that security algorithms for the system are pluggable and interchangeable. A given SAM array may be easily upgraded with new cryptographic features by simply providing additional SAMs having the same cryptographic identifier like the SAMs already present in the array of security access modules.

In another aspect, the invention relates to a computer program product comprising computer executable instructions adapted to perform the method as described above.

In the following, preferred embodiments of the invention are described in greater detail by way of example only. Thus, the following drawings are designed for the purpose of illustration only and not as a definition of the limits of the invention. In the drawings:
- Fig. 1: is a block diagram illustrating the general principles of the invention,
- Fig. 2: illustrates a flowchart of a client sharing a secure session between two SAMs,
- Fig. 3: is a flowchart illustrating state of the art secure session sharing,
- Fig. 4: is a flowchart illustrating secure session sharing according to the invention,
- Fig. 5: illustrates the principle of pluggable security algorithm.

### Detailed description

In the following, similar elements are denoted by the same reference numerals.

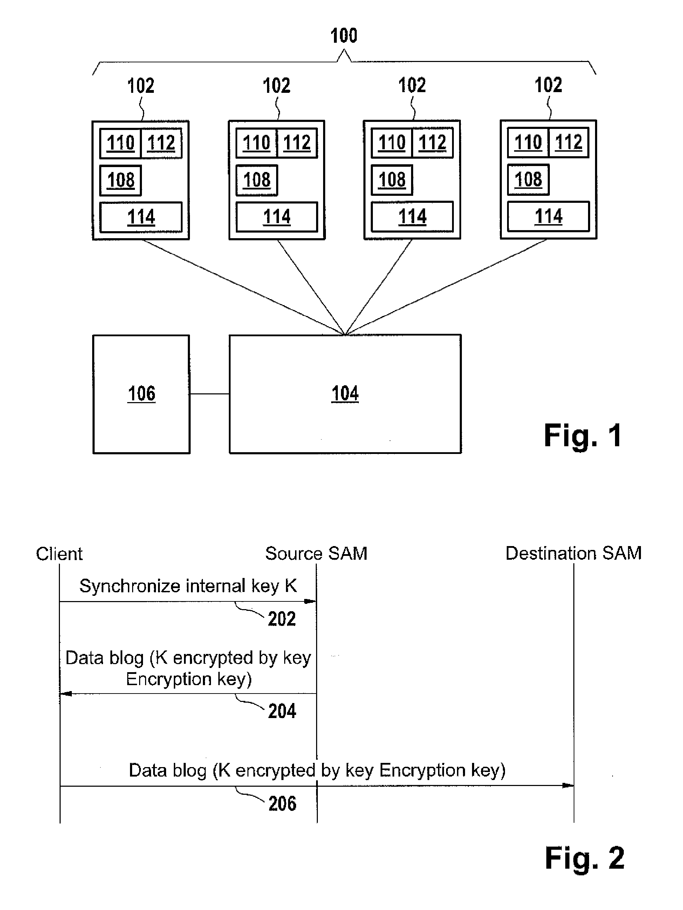

With respect to Fig. 1, a block diagram of the general principle of the invention is shown. Without loss of generality, in the following it is assumed that individual SAMs may be implemented on a smartcard. However, in general the implementation will be on security tokens, as discussed above.

In Fig. 1, an array 100 of individual security access modules (SAMs) 102 is shown. A cryptographic identifier 108 is assigned to each SAM 102. Further, a client 104 is provided which can communicate with each individual SAM 102 of the array 100. In the embodiment shown in Fig. 1, each SAM 102 comprises a key encryption key 110 and a session encryption key 112. The purpose of the session encryption key 112 is to encrypt a communication session between the client 104 and each of the SAMs 102. Either symmetric or asymmetric encryption may be used for this purpose.

The SAMs 102 further comprise an internal storage space 114 to store application keys. Access to the application keys may be performed via an authentication mechanism implemented in the SAMs 102. Alternatively, the key encryption key 110 of the SAMs 102 may be used to encrypt the application keys and store the encrypted keys outside the SAMs 102 in an external storage 106.

It has to be noted here that application keys are generally understood as any kind of cryptographic keys which are required by the client to perform certain operations. These operations may comprise cryptographic operations, access control operations or identifier operations.

Generally, the SAMs 102 preferably provide both logical and physical protection of the application keys from non-authorized use and potential adversaries.

In order to enable the usage of multiple SAMs 102 in an array 100 in a shared manner, SAM personalization is required. In one embodiment, a SAM issuer creates a specific key for the customer called the issuer key and inserts this key into the SAM before submitting it to the customer.

When receiving the SAM the customer personalizes it for example by inserting a key or pass phrase, called the customer key, that will be shared by all the SAMs part of the array - this can be typically performed by several security officers during a key ceremony. Herein, a key ceremony is understood as the procedure during which secret materials, such as keys, are securely inserted into a hardware cryptographic device. Security officers are the people inserting and keeping hold of the individual secret material parts, and the key ceremony makes sure that the full key is inserted into the cryptographic device without revealing the key.

Thereafter, the customer key and the issuer key are combined and derived to create two internal keys for the SAM and the cryptographic ID of the SAM: the two internal keys are, as mentioned above, the key encryption key 110 which will be used to encrypt and/or decrypt the application keys stored or handled by the SAM 102, and the session encryption key 112 that will be used to encrypt and/or decrypt the communication sessions between the client 104 and the SAM 102. The cryptographic ID 108 of the SAM is the unique ID identifying the issuer key/customer key couple.

In an embodiment, the following algorithms may be used for creating the internal keys and the cryptographic ID of the SAM: the key encryption key may be created by ciphering using a triple DES algorithm using the issuer key, an SHA-1 hash of the customer key and a constant. The session encryption key may be created by ciphering with a triple DES algorithm using the issuer key, an SHA-1 hash of the customer key and also another constant. The cryptographic ID is preferably an SHA-1 hash of the key encryption key and a session encryption key concatenated together. However, it has to be noted that the invention is not limited to this kind of internal key creation and cryptographic ID creation of the SAM and any other known techniques may be employed for this purpose.

After the personalization is done, all SAMs having the same cryptographic ID can share cryptographic material without compromising the security of the system, as the decryption of received cryptographic material before handling and encryption of cryptographic material before submitting will be performed internally by a set of keys shared only by the SAMs of the array. Even though a cryptographic ID is communicated to the client 104, even in case SAMs are pretending to have the same cryptographic ID these SAMs will not be able to participate in a communication with the client since this requires knowledge of the session encryption key to share information. Hence, knowing the cryptographic ID does not provide any information about the two internal keys of the SAM such that security of the SAMs in the array is not compromised.

Fig. 2 illustrates a flowchart of application key storage and synchronization. In the following it is assumed that the source SAM and the destination SAM have the same cryptographic identifier such that the source SAM and the destination SAM can share cryptographic information.

In step 200, the source SAM receives a client request for synchronization of an internal key K stored within the source SAM. In turn, in step 204 the source SAM provides the internal key K encrypted with the encryption key to the client, which in step 206 provides this encrypted internal key K to the destination SAM. Thus, the internal key K is synchronized across the source and destination SAM since these SAMs share the same cryptographic ID.

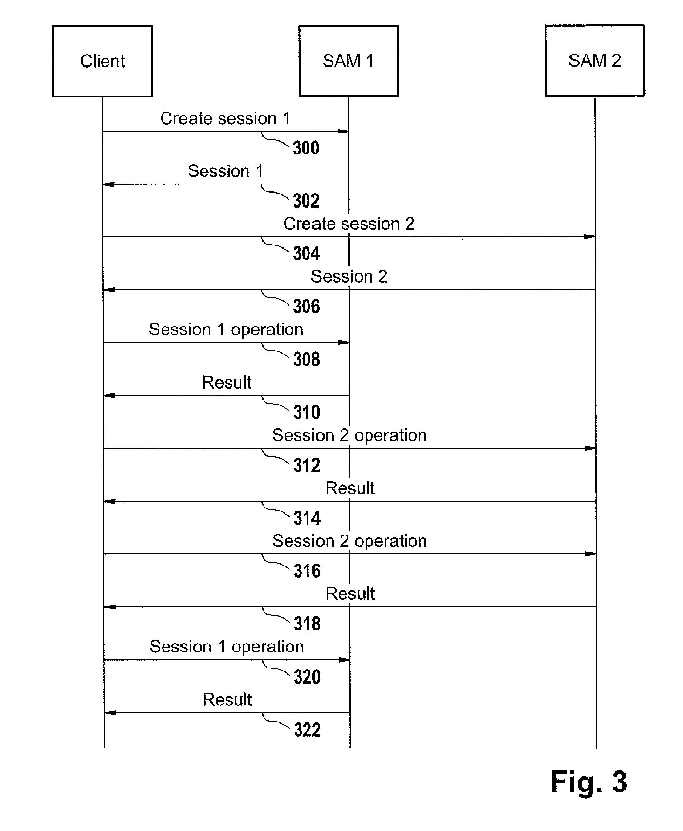

Fig. 3 illustrates secure session sharing according to the state of the art. In state of the art, even though multiple SAMs may communicate with a client, a given session is hosted into an individual SAM without the possibility of sharing a session in an easy manner with a second SAM. Typically, the number of sessions that can be handled simultaneously by an individual SAM is limited by the volatile memory space (RAM) available in the SAM, which is usually quite small. Further, each session is tied to the same SAM until it is closed, which in case a specific session lasts for an unusually long time or is not closed properly, results in that a session resource is lost in the SAM that holds this session. This may lead to critical failures in a server scenario and enables to create a trivial denial of service attack vector. Further, if a SAM holding a given session crashes, the session is automatically lost.

In the flowchart in Fig. 3, a client creates in step 300 a first session to a first SAM. This results in step 302 in a response of the SAM in order to establish a secure communication channel between the client and the SAM.

Independent of steps 300 and 302, in step 304 the client may create a second session with a second SAM, which results in step 306 in the establishment of a respective session between the client and the second SAM.

Independent of this second session, with respect to the first session established in step 302, a session operation may be performed between the client and the first SAM in step 308, which results in step 310 with the provision of a certain result from the first SAM to the client.

Independent of this session 1 operation, the client may perform a further operation in step 310 with the second SAM employing the second session, which leads to the provision of a certain result of said operation in step 314. This may be continued in an identical manner in steps 316 and 318 with the performance of a further operation between the client and the second SAM and the provision of a certain result for the second SAM to the client.

Again, independent of the first session, subsequently the client may again use the first session and perform an operation on the first SAM, as shown in step 320, which results in step 322 with the provision of a certain result of said operation from the first SAM to the client.

From Fig. 3 it can be easily understood that in case the second SAM is removed after performance of step 314, subsequent steps 316 and 318 cannot be performed anymore. However, in case the performance of steps 316 and 318 is crucial for a certain cryptographic operation like for example performing a bank transaction, said session 2 operation cannot be completed successfully and is thus completely lost.

Further, in case any session 2 operation of steps 312 or step 316 would require large amounts of memory space of the SAM or data processing capabilities of the SAM, the second SAM may not be capable of satisfying this requirement due to its limited amount of available computing and memory resources. Further, in case an error occurs during the session 1 operation 308, any subsequent operations depending on this operation provide wrong results 310 and 322.

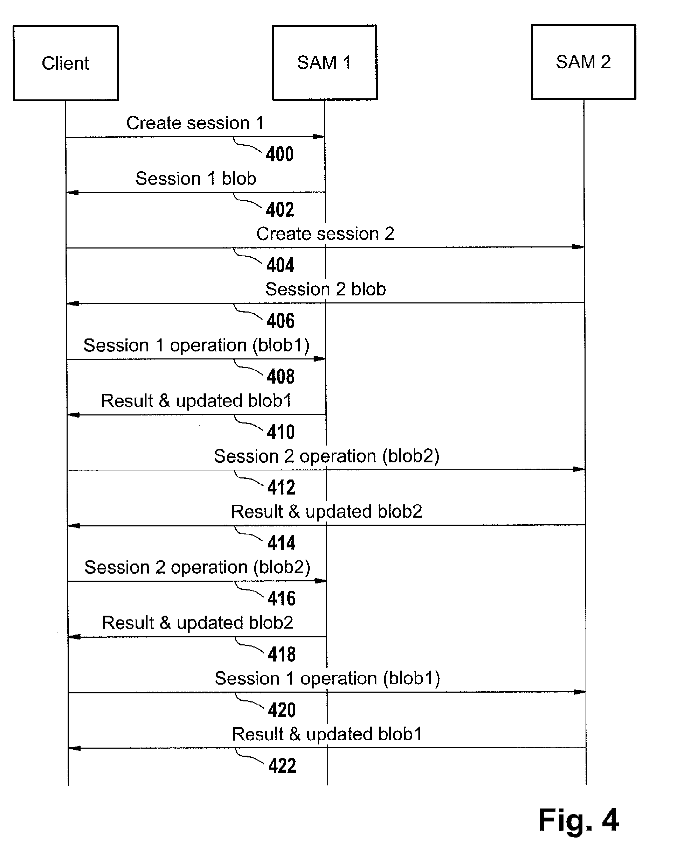

In order to overcome all these problems, the present invention provides the method of secure session sharing as shown in Fig. 4. In the scenario described in Fig. 4, all sessions are encrypted by a respective session encryption key, wherein each SAM in the array comprising the first and second SAM are stateless and can handle an arbitrary session in any arbitrary stage, such that the first SAM is equivalent to the second SAM. Second, it is assumed that the first and second SAM share the same cryptographic ID such that these first and second SAMs can reuse an ongoing session. Third, in the scenario shown in Fig. 4, the number of concurrent sessions is not limited by a SAM resource.

In detail, in Fig. 4 in step 400 the client creates a first session with the first SAM which results in step 402 with the creation of a session and the provision of a session blob from the first SAM to the client. This session blob may for example comprise the cryptographic ID of the first SAM and comprises data encrypted with the session encryption key of the first SAM. Similarly, in step 404 the client establishes a second session with the second SAM, which results in step 406 with a second blob again comprising the cryptographic ID of the second SAM, as well as data encrypted with the session encryption key of the second SAM.

In the following, it is assumed that the cryptographic ID and thus the session encryption keys of the first and second SAM are identical. According to the invention, in step 408 the client may provide an operation request ('blob 1') to the first SAM, which in step 410 results in an updated result regarding blob 1. Either parallel to the session 1 operation or subsequent to the session 1 operation, in step 412 the client may request an operation regarding the second session from the second SAM, which results in step 414 with a certain result comprising an updated blob 2.

Since the first and second SAMs are stateless, the first SAM can handle the second session in any arbitrary stage. Consequently, in step 416 the client may request an operation on a 'blob 2' with respect to the second session from the first SAM, which results in step 418 with a respective result communicated from the first SAM to the client including an updated blob 2.

Similarly, since the second SAM is also stateless, the client may request in step 420 a certain operation on blob 1 from the second SAM, which results in step 422 with a certain result comprising the updated blob 1.

It has to be noted that the performance hit during the session decryption, encryption and transmission is minimal, as the session size is usually small and the cryptographic operations are optimized in the SAM.

In the embodiment shown in Fig. 4, only information sharing in two secure communication sessions is shown. However, as mentioned above this concept may be extended for example by duplicating the first session such that the first session is occurring simultaneously or subsequently between the client and the first SAM, as well as the client and the second SAM. Further, it is possible to split the first session into individual sessions such that part of the first session is established between the client and the first SAM and the other part of the first session is established between the client and the second SAM.

Further, as mentioned above session duplication allows a transparent fault detection and recovery - if a SAM crashes during a session, the client can transparently submit the request to another SAM and avoid the previous SAM on future operations.

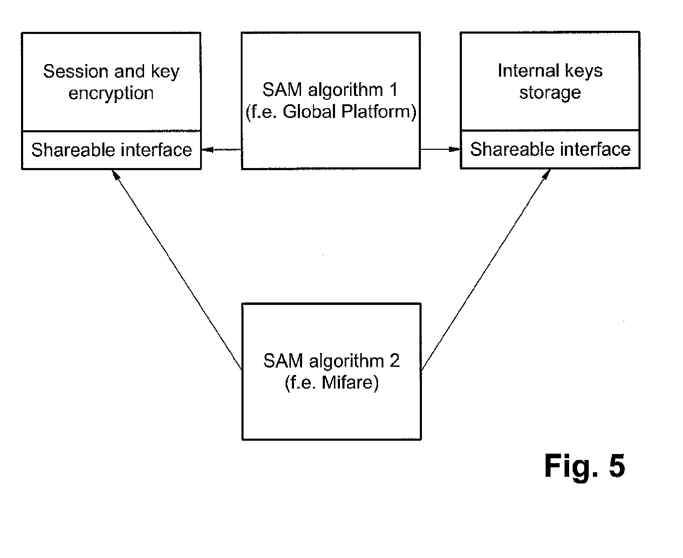

Fig. 5 describes the implementation of sharable interfaces of a Java card applet. Here, it is illustrated that generally the features of a SAM (SAM application) can be split during its design into several services: for example a service that may store the application keys internally, i.e. the 'internal keys storage' part may be implemented as a Java card applet, offering a sharable interface. Further, a service that encrypts/decrypts session data and external keys, i.e. the session and key encryption' part may be implemented as a further Java card applet, also offering a sharable interface. Finally, several security services, which are part of the SAM may be implemented as individual Java card applets that use the sharable interfaces exposed by the two other services, the process keys and session data using their own internal security logic.

These security services can be added and/or removed during the lifecycle of the SAM. Thus, this permits to support additional security methods post personalization without needing to re-personalize it thanks to a fine grained sharing mechanism between individual Java card applications. Thus in general, the individual services of a security access module application are distributed over the security access modules of the array sharing the same cryptographic identifier. Alternatively, it is possible to distribute the individual services of a security access module as individual services comprising sharable interfaces on a given SAM.

### List of Reference Numerals

| | |
|---|---|
| 100 | Array of SAMs |
| 102 | SAM |
| 104 | Client |
| 106 | Storage |
| 108 | Cryptographic identifier |
| 110 | Key encryption key |
| 112 | Session encryption key |
| 114 | Application key storage |
| 200 | Step |
| 204 | Step |
| 206 | Step |
| 300 | Step |
| 302 | Step |
| 304 | Step |
| 306 | Step |
| 308 | Step |
| 310 | Step |
| 312 | Step |
| 314 | Step |
| 316 | Step |
| 318 | Step |
| 320 | Step |
| 322 | Step |
| 400 | Step |
| 402 | Step |
| 404 | Step |
| 406 | Step |
| 408 | Step |
| 410 | Step |
| 412 | Step |
| 414 | Step |
| 416 | Step |
| 418 | Step |
| 420 | Step |
| 422 | Step |

## Claims

1. A method of communicating cryptographic information between a client (104) and an array (100) of security access modules (102), the array (100) of security access modules (102) comprising a set of individual security access modules (102), wherein a cryptographic identifier (108) is assigned to each module, the method comprising:
- communicating between the client (104) and a security access module of the array (100) of security access modules (102) the cryptographic identifier (108) of said security access module,
- communicating the cryptographic information by sharing the information between the client (104) and all security access modules (102) having assigned said communicated cryptographic identifier (108), wherein the information sharing is performed in multiple secure communication sessions.

2. The method of claim 1, wherein each security access module is comprised on a separate security token.

3. The method of claim 1, wherein sharing the information comprises splitting a single secure communication session required for communicating the cryptographic information between the client (104) and an individual security access module into the multiple secure communication sessions.

4. The method of claim 1, wherein sharing the information comprises duplicating a single secure communication session required for communicating the cryptographic information between the client (104) and an individual security access module into the multiple secure communication sessions.

5. The method of claim 4, wherein the client (104) performs fault tolerance and redundancy checks by comparing the responses obtained from different security access modules (102) in the duplicated communication sessions.

6. The method of claim 1, wherein each security access module comprises a key encryption key (110) and a session encryption key (112), wherein the security access modules (102) comprising the same cryptographic identifier (108) share the same key encryption key (110) and the same session encryption key (112).

7. The method of claim 6, wherein each secure communication session of the multiple secure communication sessions is encrypted using the session encryption key (112).

8. The method of claim 6, wherein the cryptographic identifier (108) is formed from a hashed combination of the key encryption key (110) and the session encryption key (112).

9. The method of claim 6, further comprising encrypting an application key using the key encryption key (110), wherein the encrypted application key is stored in a database (106) external to the array (100) of security access modules (102).

10. The method of claim 1, wherein communicating the cryptographic information further comprises synchronizing application keys across the security access modules (102) sharing the same cryptographic identifier (108).

11. The method of claim 1, wherein each security access module in the array (100) is stateless and adapted to handle an arbitrary communication session in any arbitrary stage.

12. The method of claim 1, wherein individual services of a security access module application are distributed over the security access modules (102) of the array (100) sharing the same cryptographic identifier (108).

13. A computer program product comprising computer executable instructions adapted to perform the method steps as claimed in the previous claims.

## Amended claims

### Amended claims in accordance with Rule 137(2) EPC.

**1.** A method of communicating cryptographic information between a client (104) and an array (100) of security access modules (102), the array (100) of security access modules (102) comprising a set of individual security access modules (102), wherein a cryptographic identifier (108) is assigned to each module, the method comprising:
- communicating between the client (104) and a security access module of the array (100) of security access modules (102) the cryptographic identifier (108) of said security access module,
- communicating the cryptographic information by sharing said cryptographic information between the client (104) and all security access modules (102) having assigned said communicated cryptographic identifier (108), wherein the information sharing is performed in multiple secure communication sessions, each communication session communicating the cryptographic information between the client and one of the security access modules.

**2.** The method of claim 1, wherein each security access module is comprised on a separate security token.

**3.** The method of claim 1, wherein sharing the information comprises splitting a single secure communication session required for communicating the cryptographic information between the client (104) and an individual security access module into the multiple secure communication sessions.

**4.** The method of claim 1, wherein sharing the information comprises duplicating a single secure communication session required for communicating the cryptographic information between the client (104) and an individual security access module for providing the multiple secure communication sessions, whereby duplicating the single secure communication session is selected from the group comprising:
- duplicating the single session such that the single session is occurring simultaneously or subsequently between the client and the individual security access module as well as between the client and any other security access module of said security access modules, and
- duplicating the single session such that the single session is split into individual sessions such that a first part of said single session is established between the client and the individual security access module and the other part of the single session is established between the client and any other security access module of said security access modules.

**5.** The method of claim 4, wherein the client (104) performs fault tolerance and redundancy checks by comparing the responses obtained from different security access modules (102) in the duplicated communication sessions.

**6.** The method of claim 1, wherein each security access module comprises a key encryption key (110) and a session encryption key (112), wherein the security access modules (102) comprising the same cryptographic identifier (108) share the same key encryption key (110) and the same session encryption key (112).

**7.** The method of claim 6, wherein each secure communication session of the multiple secure communication sessions is encrypted using the session encryption key (112).

**8.** The method of claim 6, wherein the cryptographic identifier (108) is formed from a hashed combination of the key encryption key (110) and the session encryption key (112).

**9.** The method of claim 6, further comprising encrypting an application key using the key encryption key (110), wherein the encrypted application key is stored in a database (106) external to the array (100) of security access modules (102).

**10.** The method of claim 1, wherein communicating the cryptographic information
further comprises synchronizing application keys across the security access modules (102) sharing the same cryptographic identifier (108).

**11.** The method of claim 1, wherein each security access module in the array (100) is stateless and adapted to handle an arbitrary communication session in any arbitrary stage.

**12.** The method of claim 1, wherein individual services of a security access
module application are distributed over the security access modules (102) of the array (100) sharing the same cryptographic identifier (108).

**13.** A computer program product being operatively coupled to a client (104) and
an array (100) of security access modules (102), the array (100) of security access modules (102) comprising a set of individual security access modules (102), wherein a cryptographic identifier (108) is assigned to each module, the computer program product comprising computer executable instructions adapted to perform a method of communicating cryptographic information between the client and an array of security access modules, the method comprising the steps of:
- communicating between the client (104) and a security access module of the array (100) of security access modules (102) the cryptographic identifier (108) of said security access module,
- communicating the cryptographic information by sharing said cryptographic information between the client (104) and all security access modules (102) having assigned said communicated cryptographic identifier (108), wherein the information sharing is performed in multiple secure communication sessions, each communication session communicating the cryptographic information between the client and one of the security access modules.
